# EUROPEAN PATENT SPECIFICATION

(11) **EP 1 965 687 B1**
(45) Date of publication and mention of the grant of the patent: **20.05.2009**
(21) Application number: 06841315.2
(22) Date of filing: 08.12.2006
(51) Int. Cl.: A47L 15/42, A47B 11/00, D06F 39/12

(54) **A STACKING APPARATUS**
STAPELVORRICHTUNG
DISPOSITIF D EMPILAGE

(30) Priority: 29.12.2005 TR 200505320
(43) Date of publication of application: 10.09.2008
(73) Proprietor: Arçelik Anonim Sirketi, 34950 Istanbul (TR)
(72) Inventor: SARIBAYRAKDAROGLU, Ertan, 34950 Istanbul (TR)
(86) International application number: PCT/EP2006/069503
(87) International publication number: WO 2007/074039

(56) References cited:
- DE-A1- 1 654 669
- US-A- 2 779 642

## Description

This invention relates to a stacking apparatus providing the placing of two household appliances on top of each other and the rotation of the upper one when needed.

Since the usable area in stores and houses are limited, particularly the front loaded household appliances, such as washing machines and dryers are stacked during exhibition or use. The household appliances forming a high column are prevented from falling over by attaching the two household appliances to each other by means of a stacking apparatus. In case of a breakdown, when it is needed to disassemble a component in the rear side of the upper appliance, it is required to disassemble the upper appliance and take it down.

In the patent documents with No. US5951130, FR2672962, GB2236333, DE3329615, the structures providing a dryer to be fixed onto a washing machine are defined.

In the patent document with No. US3908942, a description is given for a mounting means for television, stereo and similar items can be placed.

The aim of the present invention is the realization of a stacking apparatus providing easy access to the upper one of the two stacked household appliances for the purposes of repairing, controlling, or adjusting etc. without taking it down.

The stacking apparatus realized in order to attain the aim of the present invention is explicated in the claims.

The stacking apparatus of the present invention is used in stacking two front loaded household appliances such as washing machines and dryers wherein usually the washing machine is the lower and the dryer is the upper. The stacking apparatus placed between the two stacked household appliances provides the fixing of the upper household appliance on the lower one, and the rotation of the upper household appliance without being taken down and thus access to the back of the upper household appliance when needed.

The stacking apparatus comprises a turning platform placed on a plate, and carrier arms supporting the upper household appliance by leaning to the edges of its base.

When the upper household appliance is needed to be fixed, the carrier arms are lifted up by means of an hydraulic-pneumatic cylinder or a lever like element to be leaned to the base of the upper household appliance and the upper household appliance is kept stationary on the carrier aims. When the upper household appliance is needed to be rotated, the carrier arms are lifted down by means of a lever like element to provide the upper household appliance to be seated on the turning platform and when needed, it is rotated together with the platform easily.

The stacking apparatus realized in order to attain the aim of the present invention is illustrated in the attached figures, where:

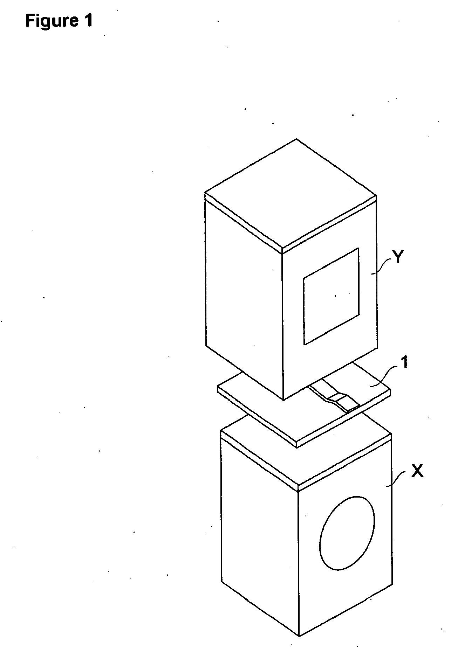

Figure 1 - A perspective view of the stacking apparatus and the two household apliances before they are mounted to each other.

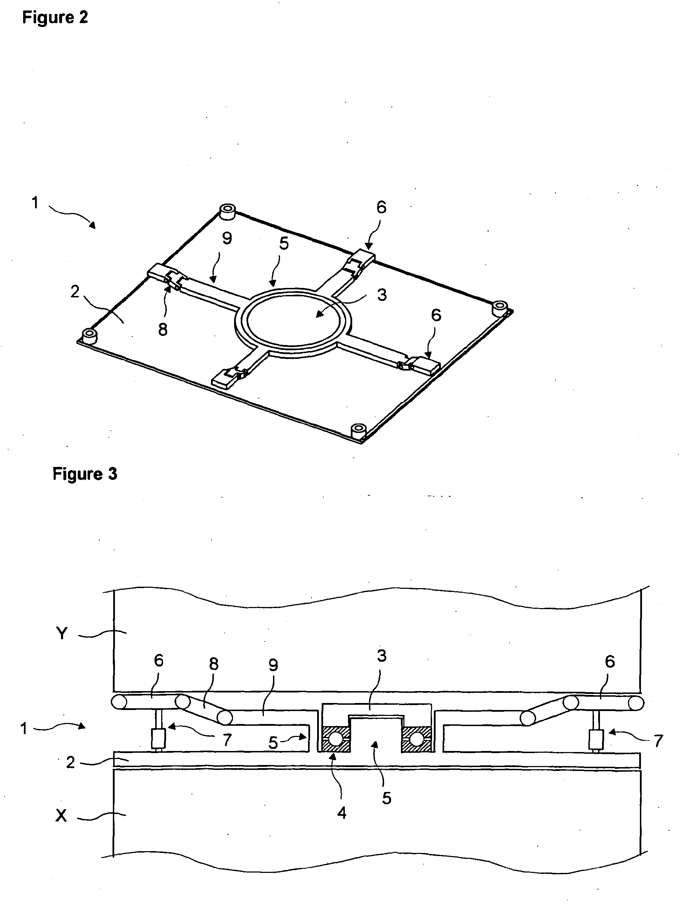

Figure 2 - A perspective view of a stacking apparatus.

Figure 3 - The schematic view of the two stacked household appliances and the stacking apparatus placed between the two in fixed position.

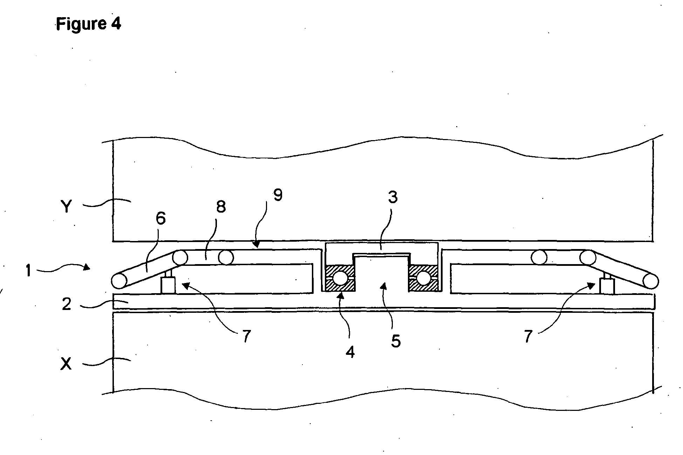

Figure 4 - The schematic view of the two stacked household appliances and the stacking apparatus placed between the two in a movable position.

Elements shown in figures are numbered as follows :
1. Stacking apparatus
2. Plate
3. Platform
4. Roller bearing
5. Hub
6. Carrier arm
7. Actuator
8. Connecting rod
9. Fixed rod

The stacking apparatus (1) of the present invention is used in stacking and attaching two household appliances (X, Y). The lower household appliance (X) is, for example, a washing machine and the upper household appliance (Y) is, for example, a dryer.

The stacking apparatus (1) is placed between the two stacked household appliances (X, Y) and provides the fixing of the upper household appliance (Y), and the rotation of the upper household appliance (Y) over the lower household appliance (X) without being taken down and thus accesing to the back of the upper household appliance (Y) when needed.

The stacking apparatus (1) comprises a plate (2) constituting its main body, carrying the elements placed on it, attached to the top surface of the lower household appliance (X), a turning platform (3) which rotates the household appliance (Y) seated on its top when it is needed to rotate the upper household appliance (Y), an axial type roller bearing (4) onto which the platform (3) is borne, providing the platform (3) to rotate around its axis easily, preferably having load carrying attribute in axial direction, a hub (5) providing the roller bearing (4) to be borne on the plate (2).

The stacking apparatus (1) comprises also, one or more carrier arms (6) leaning to the base of the household appliance (Y) in a way to keep the base of the upper household appliance (Y) placed on the plate (2) fixed at a higher level without contacting the platform (3) and carrying the household appliance (Y), and one or more actuators (7) providing the base of the household appliance (Y) and the carrier arms (6) to be separated and the base of the household appliance (Y) to be seated on the platform (3) when the rotation of the household appliance (Y) is needed.

The actuator (7) increases the level of the bottom surface of the upper household appliance (Y) to which the carrier arms (6) lean by lifting up the carrier arms (6) and separates it from the platform (3) when it is needed to keep the upper household appliance (Y) stationary.

The actuator (7) provides the platform (3) and the carrier arms (6) to be separated by pulling down the carrier arms (6) to a level lower than that of the platform (3) and the household appliance (Y) to be seated onto the platform (3) by lifting it down to a position below the stationary position when it is needed to rotate the upper household appliance (Y).

The actuator is such an element as a hydraulic-pneumatic cylinder-piston or a lever etc. operated manually or using electrical energy.

The carrier arms (6) supporting the household appliance (Y) from the mid points of each edges of its base, provide the lifting of the household appliance (Y) up and down in a well-balanced manner by means of the push-pull force applied by the actuator (7).

The stacking apparatus (1), furthermore, comprises one or more connecting rods (8) to one end of which the carrier arms (6) are movably attached, and one more fixed rods (9) providing to fix the other end of the connection rod (8) to the plate (2).

In one embodiment of the present invention, the actuator (7) provides the platform (3) to be seated on the base of the household appliance (Y) by moving it upwards when it is needed to rotate the upper household appliance (Y), and separates the household appliance (Y) and the platform (3) by pulling it downward when it is needed to keep the household appliance (Y) stationary.

The household appliance (Y) placed onto the lower household appliance (X) functioning as a support, is kept stationary when needed and rotated without being taken down from its location when it is needed to access its back for controlling, adjusting, repairing etc. by means of the stacking apparatus (1), the object of the present invention, placed between them.

## Claims

1. A stacking apparatus (1) **characterized by** a turning platform (3) placed between two stacked household appliances (X, Y), providing the rotation of the household appliance (Y) seated on it when it is needed to rotate the upper household appliance (Y), one or more carrier arms (6) which carry the household appliance (Y) by leaning to the base of the household appliance (Y) in a way to keep the basement of the upper household appliance (Y) fixed at a height without contacting the platform (3) and one or more actuators (7) providing to separate the basement of the household appliance (Y) and the carrier arms (6) and placing the basement of the household appliance (Y) to the platform (3) by making the carrier aims (6) passive and the platform (6) active when it is needed to rotate the household appliance (Y).

2. A stacking apparatus (1) as in Claim 1, **characterized by** an actuator (7) increasing the level of the base of the household appliance (Y) to which the carrier arms (6) lean by lifting up the carrier arms (6), providing to separate the platform (3) and the basement of the upper household appliance (Y) when it is needed to keep the upper household appliance (Y) stationary.

3. A stacking apparatus (1) as in Claim 1, **characterized by** an actuator (7) providing to separate the carrier arms (6) and the base of the household appliance (Y) by pulling the carrier arms (6) down to a level lower than that of the platform (3) and placing the household appliance (Y) onto the platform (3) by lifting down the household appliance (Y) from its stationary level when it is needed to rotate the upper household appliance (Y).

4. A stacking apparatus (1) as in Claim 1, **characterized by** a plate (2) constituting its main body, carrying the elements placed on it, and being attached to the top surface of the lower household appliance (X).

5. A stacking apparatus (1) as in Claim 4, **characterized by** a roller bearing (4) on which the platform (3) is borne, providing the platform (3) to rotate around its axis easily, and a hub (5) providing the roller bearing (4) to be borne on the plate (2).

6. A stacking apparatus (1) as in Claim 5, **characterized by** an axial type roller bearing (4) having the load carrying attribute in axial direction.

7. A stacking apparatus (1) as in Claim 1, **characterized by** carrier arms (6) supporting the household appliance (Y) from the mid points of each edges of its base, providing the household appliance (Y) to be lifted up and down in a well-balanced manner by means of the push-pull force applied by the actuator (7).

8. A stacking apparatus (1) as in Claim 1, **characterized by** one or more connecting rods (8) to one end of which the carrier arms (6) are movably attached, and one more fixed rods (9) providing to fix the other end of the connection rod (8) to the plate (2).

## Patentansprüche

1. Stapelvorrichtung (1), **gekennzeichnet durch** eine Drehplattform (3), die zwischen zwei gestapelten Haushaltsgeräten (X, Y) angeordnet ist, und die bei Bedarf das Drehen des darauf gesetzten Haushaltsgeräts (Y) ermöglicht, einen oder mehrere Trägerarme (6), die das Haushaltsgerät (Y) tragen, indem sie derart zu der Basis des Haushaltsgeräts (Y) hin geneigt sind, dass sie die Basis des oberen Haushaltsgeräts (Y) in einer bestimmten Höhe fixiert halten, ohne dass dieses die Plattform (3) berührt, und ein oder mehrere Stellglieder (7), die es ermöglichen, die Basis des Haushaltsgeräts (Y) und der Trägerarme (6) voneinander zu trennen, und die Basis des Haushaltsgeräts (Y) auf die Plattform (3) zu setzen, indem bei Bedarf die Trägerarme (6) passiviert werden und die Plattform (3) aktiviert wird, um das Haushaltsgerät (Y) zu drehen.

2. Stapelvorrichtung (1) nach Anspruch 1, **dadurch gekennzeichnet, dass** das Stellglied (7) die Höhe der Basis des Haushaltsgeräts (Y), zu dem die Trägerarme (6) hin geneigt sind, steigert, indem es die Trägerarme (6) anhebt, und es ermöglicht, die Plattform (3) und die Basis des oberen Haushaltsgeräts (Y) bei Bedarf voneinander zu trennen, um das obere Haushaltsgerät (Y) stationär zu halten.

3. Stapelvorrichtung (1) nach Anspruch 1, **dadurch gekennzeichnet, dass** das Stellglied (7) es ermöglicht, die Trägerarme (6) und die Basis des Haushaltsgeräts (Y) voneinander zu trennen, indem es die Trägerarme (6) auf eine Höhe unterhalb der Plattform (3) absenkt und das Haushaltsgerät (Y) auf die Plattform (3) setzt, indem es das Haushaltsgerät (Y) bei Bedarf aus seiner stationären Höhe herab hebt, um das obere Haushaltsgerät (Y) zu drehen.

4. Stapelvorrichtung (1) nach Anspruch 1, **gekennzeichnet durch** eine Platte (2), die seinen Grundkörper bildet, und die darauf gesetzten Elemente trägt, und an der Oberfläche des unteren Haushaltsgeräts (X) befestigt ist.

5. Stapelvorrichtung (1) nach Anspruch 4, **gekennzeichnet durch** ein Kugellager (4), auf dem die Plattform (3) ruht, und das es ermöglicht, dass sich die Plattform (3) leicht um ihre Achse dreht, sowie eine Nabe (5), die es ermöglicht, dass das Kugellager (4) auf der Platte (2) ruht.

6. Stapelvorrichtung (1) nach Anspruch 5, **dadurch gekennzeichnet, dass** das Kugellager (4) ein Axialkugellager ist, das eine Lasttrageeigenschaft in Axialrichtung aufweist.

7. Stapelvorrichtung (1) nach Anspruch 1, **dadurch gekennzeichnet, dass** die Trägerarme (6) das Haushaltsgerät (Y) von den Mittelpunkten der einzelnen Kanten seiner Basis aus tragen, und es ermöglichen, dass das Haushaltsgerät (Y) mittels der Druck- und Zugkraft des Stellglieds (7) in gut ausbalancierter Weise angehoben und abgesenkt wird.

8. Stapelvorrichtung (1) nach Anspruch 1, **gekennzeichnet durch** eine oder mehrere Verbindungsstangen (8), an deren einem Ende die Trägerarme (6) beweglich angebracht sind, und eine oder mehrere fest angeordnete Stangen (9), mittels derer das andere Ende der Verbindungsstange (8) an der Platte (2) fixiert ist.

## Revendications

1. Un appareil d'empilage (1) **caractérisé par** une plate-forme tournante (3) placée entre deux appareils ménagers empilés (X, Y), permettant la rotation de l'appareil domestique (Y) assis sur elle quand il y a besoin de faire pivoter la partie supérieure de l'électroménager (Y), un ou plusieurs bras (6), qui portent les appareils domestiques (Y) en s'appuyant à la base de l'électroménager (Y) de manière à maintenir le sol de la partie supérieure de l'électroménager (Y) fixé à une hauteur sans contact avec la plate-forme (3) et un ou plusieurs vérins (7) prévoyant de séparer le sol de l'électroménager (Y) et le transporteur de bras (6) et plaçant le sol de l'électroménager (Y) à la plate-forme (3) en rendant le transporteur de bras (6) passif et la plate-forme (3) active quand il y a besoin de faire pivoter l'appareil électroménager (Y).

2. Un appareil d'empilage (1) selon la Revendication 1, **caractérisé par** un vérin (7) augmentant le niveau de la base de l'électroménager (Y), sur laquelle le transporteur de bras (6) s'appuie en s'élevant en tant que transporteur de bras (6), prévoyant de séparer la plate-forme (3) et le sol de la partie supérieure de l'électroménager (Y) quand il y a besoin de garder le haut appareil électroménager (Y) fixe.

3. Un appareil d'empilage (1) selon la Revendication 1, **caractérisé par** un vérin (7) prévoyant de séparer le transporteur de bras (6) et la base de l'appareil électroménager (Y) en abaissant le transporteur de bras (6) à un niveau plus bas que celui de la plate-forme (3) et en plaçant l'appareil électroménager (Y) sur la plate-forme (3) en tirant l'appareil électroménager (Y) vers le bas par rapport à son niveau fixe, quand il y a besoin de faire pivoter l'appareil électroménager supérieur (Y).

4. Un appareil d'empilage (1) selon la Revendication 1, **caractérisé par** un plateau (2) constituant son corps principal, transportant les éléments qui sont placés dessus, et lié à la surface supérieure de l'appareil électroménager inférieur (X).

5. Un appareil d'empilage (1) selon la Revendication 4, **caractérisé par** un roulement à rouleaux (4) sur lequel la plate-forme (3) est bornée, permettant à la plate-forme (3) de tourner autour de son axe facilement, et un hub (5) assurant un roulement à rouleaux (4) à se borner sur le plateau (2).

6. Un appareil d'empilage (1) selon la Revendication 5, **caractérisé par** un roulement à rouleaux (4) de type axial ayant la capacité de transporter des charges dans la direction axiale.

7. Un appareil d'empilage (1) selon la Revendication 1, **caractérisé par** un transporteur de bras (6) soutenant l'appareil électroménager (Y) par les mi-points de chacun des bords de sa base, permettant à l'appareil électroménager (Y) d'être levé et baissé de manière bien équilibrée par le biais de la force push-pull appliquée par le vérin (7).

8. Un appareil d'empilage (1) selon la Revendication 1, **caractérisé par** une ou plusieurs bielles (8) à une extrémité de laquelle le transporteur de bras (6) est attaché mais mobile, et encore une bielle fixe (9) prévoyant de fixer l'autre extrémité de la bielle de raccordement (8) du plateau (2).
